# EUROPÄISCHE PATENTSCHRIFT

(11) **EP 3 718 695 B1**
(45) Veröffentlichungstag und Bekanntmachung des Hinweises auf die Patenterteilung: **03.11.2021**
(21) Anmeldenummer: 19167561.0
(22) Anmeldetag: 05.04.2019
(51) Int. Cl.: F16L 13/14, F16L 33/207, B25B 27/10, B25B 25/00

(54) **PRESSWERKZEUG FÜR EINEN FITTING MIT PRESSLASCHE**
PRESS TOOL FOR A FITTING WITH PRESS TAB
OUTIL DE COMPRESSION POUR UN RACCORD À MANCHON DE COMPRESSION

(43) Veröffentlichungstag der Anmeldung: 07.10.2020
(73) Patentinhaber: Geberit International AG, 8645 Jona (CH)
(72) Erfinder: Graf, Pascal, 8132 Egg (CH); Heusser, Urs, 8722 Kaltbrunn (CH); Mainhart, Patrick, 97499 Donnersdorf (DE)
(74) Vertreter: König Szynka Tilmann von Renesse Patentanwälte Partnerschaft mbB

(56) Entgegenhaltungen:
- EP-A1- 2 796 245
- EP-A1- 2 918 375
- EP-A1- 3 090 835
- DE-A1-102016 004 409
- US-B2- 7 363 799

## Beschreibung

Die vorliegende Erfindung bezieht sich auf ein Presswerkzeug zum Verpressen eines Fittings.

Fittinge dienen zum Befestigen einer Schlauch- und hier vorzugsweise Rohrleitung an einem anderen Teil, etwa einer Armatur, oder zum Koppeln von Leitungen aneinander. Man unterscheidet unterschiedliche Typen, und zwar nach der Art der abdichtenden Befestigung der Leitung an dem Fitting. Neben selbst-arretierenden Schiebefittingen, bei denen die Leitung eingesteckt wird und sich bei Zugbelastung in umgekehrter Richtung selbst befestigt, und Schiebefittingen, bei denen ein Fittingteil zur Befestigung in axialer Richtung (bezogen auf die Leitung) verschoben wird, sind auch Pressfittinge bekannt. Bei diesen wird ein Fittingteil mit einem speziellen Werkzeug plastisch verformt; im Regelfall handelt es sich um ein Metallblechteil. Bei vielen Pressfittingen dient dabei eine hohlzylindrische Metallblech-Presshülse zum Verpressen und wird entlang ihres im Wesentlichen gesamten Umfangs und damit auch entlang des gesamten Umfangs der Leitung von einer Presszange gegriffen und verformt.

Im Unterschied dazu gibt es speziellere Pressfittingtypen mit von einem im Wesentlichen hohlzylindrischen beziehungsweise ringförmigen Teil radial (wieder in Bezug auf die Zylindergeometrie und damit die Leitung) abstehender Presslasche. Beim Verpressen greift das Werkzeug nur die Presslasche, wobei diese senkrecht zur axialen und zur radialen Richtung in solcher Weise zusammengepresst wird, dass der ringförmige Teil gespannt und auf die Leitung aufgedrückt wird. In der Literatur wird hier in Anlehnung an einen einschlägigen Schweizer Hersteller öfters auch von Oetiker-Typ gesprochen, gelegentlich findet sich für die Presslasche auch der Ausdruck "Pressohr".

Bei der Presslasche handelt es sich in der Regel um einen einstückig mit dem ringförmigen Teil ausgebildeten Blechstreifenabschnitt, der radial gegenüber der Ringform nach außen vorsteht und dabei oft ein im wesentlichen flaches Plateau bildet, das nach außen weist. Ein aus der Presslasche und dem ringförmigen beziehungsweise Zylinderteil bestehende Metallblechabschnitt des Pressfittings wird oft auch als Spannzange bezeichnet. Das Presswerkzeug greift zwischen das Plateau und den ringförmigen Teil und erzeugt oder verstärkt beim Verpressen Hinterschnitte.

Beispielhaft kann verwiesen werden auf die EP 2 341 273 A1, die EP 2 497 989 A1, die EP 2 607 764 A1 und schließlich die EP 2 607 768 A1.

Die zugehörigen Presswerkzeuge werden gelegentlich auch als Presszangen bezeichnet und bilden häufig Aufsätze für motorische (insbesondere pneumatische) Antriebe. Beispielsweise bietet die bereits erwähnte Schweizer Herstellerin Oetiker solche Presswerkzeuge mit Motorantrieb an. Dem Begriff "Zange" entsprechend weisen die Presswerkzeuge zwei Werkzeughälften auf, die aufeinander zu und voneinander weg bewegbar sind, was einer Schließ- und einer Öffnungsbewegung entspricht. Die Werkzeughälften weisen dabei regelmäßig mehr oder weniger keilförmige Spitzen auf, die in den bereits erwähnten Bereich zwischen dem Plateau der Spannzange und der Presslasche eingreifen.

Dabei haben die Werkzeughälften natürlich zunächst die Funktion der Verpressung der Presslasche, andererseits muss aber auch eine geometrische Führung des Presswerkzeugs bei der Schließbewegung sichergestellt werden. Diese Führungsfunktion kann sich einfach daraus ergeben, dass eine keilförmige Werkzeughälften-Spitze bei fortschreitender Schließbewegung anstößt und damit eine korrekte Ausrichtung erzwingt, in der sie dann tiefer in den Zwischenraum eindringen kann.

Allerdings zeigt die EP 3 090 834 A1 derselben Anmelderin ein weiter entwickeltes Konzept eines Presswerkzeugs mit eigens zu diesem Zweck optimierten Führungsteilen der Werkzeughälften, die eine Bedienungsperson bei der korrekten Ausrichtung unterstützen können. Dieses Konzept ist mit der vorliegenden Erfindung kompatibel.

Ferner wird verwiesen auf die EP 3 090 835 A1 derselben Anmelderin, die auf dieser Grundlage hinsichtlich des Umgangs mit einem als Indikator für den Verpressvorgang dienenden abclipsbaren Teil an dem Pressfitting, konkret der Presslasche, weiterentwickelt ist. Hier geht es insbesondere um in dem Presswerkzeug vorgesehene Auswurföffnungen. Auch der Inhalt dieses Standes der Technik ist mit der vorliegenden Erfindung kompatibel.

Neben den beiden zuletzt genannten Dokumenten, von denen das zweite dem Oberbegriff des Anspruchs 1 zugrundeliegt, wird außerdem auf die EP 2 918 375 A1 verwiesen, die ein Presswerkzeug für einen, zwei axial aufeinander zu zu schiebende Ringe aufweisenden Fitting zeigt. Dabei sind Pressteile des Werkzeugs nach einem radialen Schluss axial verschiebbar, um einen solchen Ring axial zu bewegen. Das Werkzeug weist in den Figuren mit 8 bezifferte außen liegende Platten auf.

Sowohl die Unterstützung einer Bedienperson bei der korrekten Positionierung zum Verpressen als auch die einfache und verwechslungssichere Kontrolle der Verpressung wirklich aller zu verpressenden Fittinge durch den erwähnten Indikator haben den Hintergrund, dass es bei den Verpressvorgängen auf der Baustelle wegen Zeitdruck, schlechten Sichtverhältnissen, unsorgfältigem Personal oder anderen Umständen zu Fehlern kommen kann. Durch die beschriebenen früheren Anmeldungen ist diesbezüglich ein deutlicher Fortschritt erzielt worden. Dieser vorliegenden Anmeldung liegt nun das technische Problem zugrunde, ein Presswerkzeug mit einer weiter verbesserten Benutzungssicherheit anzugeben.

Diese Aufgabe wird gelöst durch ein Presswerkzeug für einen Fitting mit einem zylindrischen Teil und einer davon abstehenden Presslasche, die senkrecht zu einer axialen Richtung des Fittings zu verpressen ist, welches Presswerkzeug aufweist: zwei mit einer Bewegung aufeinander zu schließbare und mit einer Bewegung voneinander weg öffenbare Werkzeughälften mit jeweils einem der Verpressung der Presslasche bei der Schließbewegung dienenden Pressteil und dem Führen des Presswerkzeugs auf dem Pressfitting bei der Schließbewegung dienenden Führungsteilen, wobei die beiden Werkzeughälften jeweils doppelt ausgeführte Führungsteile aufweisen, die bezüglich der axialen Richtung beidseits des jeweiligen Pressteils vorgesehen sind, und zwei die jeweiligen Führungsteile in einer Projektion in einer zu der Richtung der Schließbewegung senkrechten und zu dem zylindrischen Teil achsparallelen Leitungsrichtung überlappende Platten, und zwar je eine Platte auf jeder Seite der Pressteile bzgl. der Leitungsrichtung, dadurch gekennzeichnet, dass die Platten in der Leitungsrichtung jeweils außerhalb der Führungsteile liegen und diese als Abdeckplatten nach außen zumindest teilweise schützend abdecken.

Bevorzugte Ausgestaltungen sind in den abhängigen Ansprüchen angegeben.

In den bereits zitierten Patentdokumenten der Anmelderin wird zwischen Pressteilen der Werkzeughälften und Führungsteilen unterschieden, wobei die Führungsteile für jede Werkzeughälfte jeweils doppelt ausgeführt und beidseits in Bezug auf die Leitungsrichtung (die axiale Richtung des zylindrischen Teils des Pressfittings bei Verpresspositionierung des Presswerkzeugs) beidseits der Pressteile angeordnet sind. Dabei decken die Führungsteile in diesem Stand der Technik die Pressteile in dieser Leitungsrichtung nach außen weitgehend ab, jedenfalls ab den dort vorgesehenen beiden Drehachsen, um die die Führungsteile und die Pressteile verschwenkt werden können.

In der Praxis kann es aber vorkommen, dass der in Bezug auf eine Längsrichtung vordere (dem Pressfitting bei der Verpressung zugewandte) Teil des Presswerkzeugs Stoßbelastungen ausgesetzt wird, z. B. weil eine Bedienpersonen unvorsichtig damit umgeht und anstößt oder weil das Presswerkzeug fällt und aufprallt. Dabei kann es zu Beschädigungen kommen, und zwar insbesondere Beschädigungen der außenliegenden Führungsteile. Wenn jedoch die Führungsteile oder auch die Pressteile verbogen oder infolge von Brüchen oder Rissen anderweitig beeinträchtigt sind, kann dies eine korrekte Verpressung infrage stellen oder verhindern. Im günstigeren Fall wird das erkannt und das Presswerkzeug nicht mehr eingesetzt, wobei es dann bei einem wirtschaftlichen Schaden durch das defekte Presswerkzeug bleibt. Im ungünstigeren Fall wird das Presswerkzeug dennoch eingesetzt mit dem Risiko fehlerhafter Verpressungen.

In diesem Zusammenhang ist auch darauf hinzuweisen, dass die grundsätzlich günstige und auch im Rahmen der vorliegenden Erfindung wieder angestrebte Formgestaltung der für die eigentliche Führungsfunktion relevanten Teile der Führungsteile, also der mit dem Fitting in Kontakt kommenden Teile, dort eine gewisse Hohlform oder konkave Ausgestaltung bedingt, die naturgemäß empfindlicher ist als eine massive und eher plattenförmige Ausgestaltung.

Die vorliegende Erfindung fußt auf der Idee, dass die in dem Stand der Technik beschriebenen Führungsteile nicht ganz außen liegen, jedenfalls nicht in Gänze. Daher schlägt die Erfindung einen außenseitigen Schutz durch eine jeweilige Abdeckplatte vor. Diese kann fest und stabil verbaut werden, weil sie sich nicht mit den Pressteilen und Führungsteilen mitbewegen muss, und darüber hinaus bei Bedarf auch relativ massiv ausgeführt sein. Einerseits schützt sie die Führungsteile und natürlich auch die Pressteile durch eine relativ weit gehende seitliche Abdeckung. Andererseits werden aber nicht abgedeckte Bereiche z. B. der Führungsteile jedenfalls noch insoweit stabilisiert, als sich diese mit kürzeren Hebelarmen an der Abdeckplatte abstützen können und insoweit, so weit sie überstehen über die Abdeckplatte, dennoch eine gewisse Stabilisierung erfahren.

Wie schon bei den zitierten Patentdokumenten sind die Pressteile und Führungsteile vorzugsweise drehbeweglich gelagert, also gelenkig bewegbar. Wie auch schon in den zitierten Dokumenten ist aber vorzugsweise für jede Werkzeughälfte eine eigene Gelenkachse vorgesehen und ist wiederum vorzugsweise diese Gelenkachse jeder Werkzeughälfte dort gemeinsam für die Führungsteile und das Pressteil vorhanden. Die Gelenkachsen können insbesondere durch die entsprechenden Teile durchsetzende Achsbolzen realisiert sein, die vorzugsweise auch die Abdeckplatten durchsetzen. Insoweit können die Abdeckplatten dann auch die Funktion von Lagerplatten übernehmen, also den oder die Achsbolzen maßgeblich halten. Solche Lagerplatten gibt es in den Ausführungsformen der zitierten Patentdokumente auch, sie sind allerdings bezüglich der Leitungsrichtung innerhalb der Führungsteile angeordnet. Insoweit kann also die vorliegende Erfindung bei einer günstigen Ausgestaltung gewissermaßen durch eine Veränderung der Reihenfolge der Teile (Pressteile, Führungsteile, Lagerplatte) gegenüber den vorgeschriebenen Ausführungsformen hergestellt werden. Damit lässt sich die vorliegende Erfindung abgesehen von der Umkonstruktion ohne nennenswerten Mehraufwand realisieren, insbesondere ohne zusätzliche Teile, falls dies gewünscht ist. Dann würden sich also die Bauteilschichten beschränken auf die Pressteile, Führungsteile, Abdeckplatten und eventuelle Überstände der Achsbolzen (mit Sicherungsringen oder -muttern).

Weiterhin sollen die Abdeckplatten die Führungsteile vor allem im stoßgefährdeten vorderen Bereich (also dem Pressfitting zugewandten Bereich) flächig abdecken, wobei dies in einer Breitenrichtung (ungefähr parallel zu der Richtung der Schließbewegung, also senkrecht zur Längsrichtung und senkrecht zur Leitungsrichtung) vollständig gilt, wie das Ausführungsbeispiel zeigt. In der zu der Leitungsrichtung und der Breitenrichtung senkrechten Längsrichtung (bezüglich des zylindrischen Teils des Pressfittings radial und von dessen Achse aus durch die Presslasche hindurch zum Presswerkzeug gerichtet, jedenfalls während der Verpressung) gilt das nur eingeschränkt.

Bezüglich der Längsrichtung sollten die Führungsteile von den Abdeckplatten gemäß einer Ausführungsform der Erfindung nämlich nicht bis ganz nach vorn abgedeckt werden. Man erreicht dann, wenn man ein letztes vorderes Reststück der Führungsteile nicht abgedeckt lässt, weitere Freiheitsgrade hinsichtlich einer schlanken Ausgestaltung des Presswerkzeugs (in der Leitungsrichtung), denn dann trägt die Stärke der Abdeckplatten nicht mehr notwendigerweise zusätzlich zu dem Maß des Presswerkzeugs in dieser Leitungsrichtung, jedenfalls in einem vorderen Bereich, bei. Andererseits erfordern die vordersten Teile der Pressteile und Führungsteile ein gewisses Maß in dieser Leitungsrichtung. Das Ausführungsbeispiel verdeutlicht diesen Zusammenhang.

Insbesondere verdeutlicht das Ausführungsbeispiel dabei auch, dass die im vorderen Bereich in der Leitungsrichtung verdickten Teile der Führungsteile bzw. die dementsprechend schlankere Gestaltung weiter hinten liegender Bereiche der Führungsteile ermöglichen, die Abdeckplatten ganz oder teilweise (hinsichtlich der Leitungsrichtung) "in die Führungsteile einzulassen", also wenig oder gar nicht über diese (bezüglich der Leitungsrichtung) überstehen zu lassen.

Konkret ist bevorzugt, dass die Führungsteile von den Abdeckplatten bis mindestens zu einem solchen Abstand zu der vordersten Seite (bezogen auf die Längsrichtung) abgedeckt werden, dass dieser Abstand höchstens 25 %, bevorzugterweise höchstens 20 % oder sogar nur höchstens 15 %, des entsprechenden Abstands in der vertikalen Richtung zwischen einer für die Schließbewegung vorgesehenen Drehachse und der genannten vordersten Stelle beträgt. Zusätzlich oder alternativ ist bevorzugt, dass der verbleibende Abstand zwischen der vordersten Seite der Abdeckplatte und der vordersten Seite des Presswerkzeugs höchstens 35 %, vorzugsweise höchstens 30 % oder sogar nur höchstens 25 % der maximalen Breite, der Abdeckplatte beträgt. Andererseits soll der gerade beschriebene Abstand der Abdeckplatten nach vorn mindestens 2 %, vorzugsweise mindestens 4 %, mindestens 6 % oder sogar mindestens 8 % in Bezug auf den Vergleichsabstand in der Längsrichtung (bezogen auf die Drehachse) bzw. mindestens 10 %, vorzugsweise mindestens 12 %, mindestens 14 % oder sogar mindestens 16 % in Bezug auf die genannte Breite betragen. Beim ersten Ausführungsbeispiel betragen diese Werte übrigens etwa 11 % bzw. etwa 19 %.

Alternativ könnte man auch die Abdeckplatten ganz bis nach vorn ragen lassen, also die Führungsteile nicht wie im Ausführungsbeispiel vorne verdickt ausführen. Dann können die Abdeckplatten die Führungsteile im vorderen Bereich ganz oder jedenfalls weitgehend seitlich abdecken und ihre Schutzfunktion insoweit noch in größerem Umfang gewährleisten. Andererseits erfordert das Führungskonzept bei der hier gegenständlichen Ausgestaltung eine gewisse Breite der Führungsteile in der axialen Richtung (des zylindrischen Fittingteils), sodass die hier diskutierte alternative Ausgestaltung insgesamt zu einer größeren Breite in dieser Richtung führen würde. Es müsste nämlich die Stärke der Abdeckplatten jedenfalls im vorderen Bereich hinzugerechnet werden, anders als beim Ausführungsbeispiel. Im Ausgleich zu der erhöhten Stabilität hat eine solche Ausführungsform damit gewisse Nachteile, etwa wenn schlecht zugänglich montierte Pressfittinge zur Verpressung anstehen, z. B. vor Bogenstücken oder T-Stücken oder vor einer angrenzenden Wand.

Wie in der bereits zitierten EP 3 090 834 A1 ist vorzugsweise vorgesehen, dass zumindest in einer der Verpressung dienenden Schlussphase der Schließbewegung jedes Pressteil über die jeweiligen Führungsteile hinaus aufeinander zu bewegbar ist. Dabei wird zwischen der Pressfunktion und der Führungsfunktion insoweit unterschieden, als die entsprechenden Press- und Führungsteile der beiden Werkzeughälften teilweise getrennt beweglich sind. Im übrigen Stand der Technik kann man zwar den Werkzeughälften in gewissem Sinn eine Führungsfunktion zuschreiben, diese ergibt sich jedoch eher zwangsläufig aus der Pressfunktion und der Geometrie der Presslasche. Insoweit bleiben in der Schlussphase der Schließbewegung die Führungsteile stehen und bewegt sich nur noch das Pressteil weiter. Eine richtige Positionierung kann durch Herstellung eines Formschlusses mit entsprechend angepassten Führungsteilen des Fittings geschehen. Dieser Formschluss muss nicht zwingend vollständig, also spielfrei, erfolgen, sondern kann auch angenähert hilfreich sein. Ein Restspiel entspricht natürlich einer Restungenauigkeit in der Positionierung und die Positionierung ist für einen zuverlässigen praktischen Erfolg weder mit dem Stand der Technik noch mit der vorliegenden Erfindung mathematisch genau durchzuführen. Der Begriff des Formschlusses bedeutet auch nicht zwingend, dass keine Positionierung hinsichtlich aller denkbaren Bewegungsfreiheitsgrade stattfinden muss. Es ist schon ein technischer Erfolg, wenn die Positionierung bestimmte Bewegungsfreiheitsgerade betrifft (und die benutzende Person auf die übrigen achten muss). Bevorzugt ist natürlich, dass Formschluss und Positionierung sämtliche denkbaren Freiheitsgrade betreffen.

Erfindungsgemäß können die Führungsteile der Werkzeughälften an die ihnen zugeordneten Teile des Pressfittings näher herangebracht werden als im Stand der Technik, weil im Stand der Technik bei einer gemeinsamen Bewegung der Führungsteile und Pressteile (aufgrund einstückiger Ausführung) vor der eigentlichen Verpressung zwischen den Führungsteilen der Werkzeughälften und den ihnen zugeordneten Pressfittingteilen relativ viel Abstand verbleiben muss. Wenn hingegen die Pressteile in der Schlussphase allein weiterbewegt werden, können dementsprechend die Formteile der Werkzeughälften nah oder sogar in Anlage an die ihnen zugeordneten Pressfittingteile gebracht werden.

Aus der in der Schlussphase getrennten Bewegbarkeit ergibt sich schon, dass die jeweiligen Press- und Führungsteile nicht einstückig ausgebildet sein können. Sie bewegen sich aber vorzugsweise um zumindest geometrisch die jeweils gleiche Drehachse und weiter vorzugsweise auch um baulich die gleiche Gelenkachse. Weiter vorzugsweise führen sie bis zum Anfang der Schlussphase, in der die Führungsteile stehen bleiben, eine gemeinsame und gekoppelte Bewegung aus, sind also relativ zueinander während dieser Anfangsphase der Bewegung unbeweglich.

Die geometrische Passung zur Positionierung der Führungsteile und damit des Presswerkzeugs relativ zum Fitting, die vorstehend als "Formschluss" bezeichnet wurde, kann zum Beispiel in einander ungefähr entsprechenden negativen und positiven Formen der Führungsteile einerseits am Presswerkzeug und andererseits am Fitting bestehen beziehungsweise dadurch hergestellt werden. Zum Beispiel kann ein gewinkeltes Eckstück an dem Führungsteil oder als Führungsteil des Presswerkzeugs (zum Beispiel beim Aneinandertreffen einer zur Gelenkachse und Leitungsrichtung senkrechten äußeren Seitenwand und einer dazu ungefähr senkrechten und zur Gelenkachse und Leitungsrichtung ungefähr parallelen Stirnfläche, die dem zylindrischen Fittingteil und der Leitung zugewandt ist) eine solche rechtwinklige Hohlform erzeugen. Ein entsprechender Vorsprung oder eine Ecke am Fitting passt dann dazu und stellt während eines Teils der Schließbewegung eine entsprechende Führung zur Verfügung.

Das Ausführungsbeispiel zeigt ferner eine bevorzugte Ausgestaltung, nämlich eine schräge Führungsfläche, wobei sich die Angabe "schräg" auf die Schließbewegung der Werkzeug-Führungsteile unmittelbar vor der Schlussphase bezieht. Diese schräge Führungsfläche kann mit dem Führungsteil am Fitting zusammenwirken, insbesondere auch mit einer schrägen Führungsfläche dort, und ein Hineinschieben in die richtige Position bewirken. In einem bevorzugten Fall betrifft dies eine zentrische Ausrichtung des Presswerkzeugs hinsichtlich der Leitungsrichtung. Dazu ist dann die schräge Führungsfläche bevorzugt in Bezug auf das Werkzeug nach innen gerichtet und an einem in Bezug auf die Leitungsrichtung axial äußeren Teil des Führungsteils vorgesehen, etwa einer Außenwand.

Vorzugsweise greifen die Führungsteile axial beidseits der Presslasche, und zwar vorzugsweise die Führungsteile des Pressfittings, und führen damit entlang der Leitungsrichtung zentrierend, also axial.

Bei einer anderen, aber kombinierbaren und ebenfalls bevorzugten Variante betrifft die schräge Führungsfläche das auf den Fitting zu Ziehen des Presswerkzeugs. Dazu kann diese schräge Führungsfläche an einem dem zylindrischen Fittingteil und der Leitung zugewandten und insoweit äußeren Teil des Werkzeug-Führungsteils vorgesehen sein. Auch dabei ist diese schräge Führungsfläche in Bezug auf das Werkzeug nach innen gerichtet, also von dem zylindrischen Fittingteil und der Leitung wegweisend.

Zu den Varianten der Führungsflächen wird auf die EP 3 090 834 A1 verwiesen.

Wie bereits erläutert, kommen die Führungsteile der beiden Werkzeughälften vorzugsweise vor der Schlussphase der Schließbewegung, also vor dem eigentlichen Verpressen, zum Halten, und zwar besonders bevorzugterweise durch einen Anschlag an dem Pressfitting in Verbindung mit der Herstellung des Formschlusses.

Ferner können die Pressteile und Führungsteile jeder Werkzeughälfte in einer verschieblichen Weise aneinander gekoppelt sein, vorzugsweise durch einen Eingriff eines Vorsprungs an einem der Teile in einen Längsschlitz an einem anderen, zum Beispiel also durch Eingriff eines Vorsprungs an beiden axialen Außenseiten der beiden Pressteile in jeweilige Längsschlitze an je zwei axial daneben liegenden Führungsteilen. Dabei können sich die Vorsprünge in den Längsschlitzen so bewegen, dass sich die Pressteile in der Schlussphase der Schießbewegung weiterbewegen können, wobei die Längsschlitze auch für diese Bewegung einen Endpunkt definieren können (Anschlag des Vorsprunges am Ende des Längsschlitzes). Andererseits kann diese Kopplung dazu dienen, dass das Teil mit dem Längsschlitz von dem Teil mit dem Vorsprung mit zurückgenommen wird, wenn die Verpressung abgeschlossen ist. Dementsprechend kann dann nur das Teil mit dem oder den Vorsprüngen motorisch angetrieben sein, zum Beispiel das Pressteil. Bei dieser Kopplung kann ferner das den Vorsprung oder die Vorsprünge tragende Teil federnd an das den Längsschlitz tragende Teil gekoppelt sein, wobei vorzugsweise der Vorsprung selbst federbeaufschlagt ist. Dadurch kann erreicht werden, dass bis zum Anschlag der Führungsteile (etwa aneinander) diese gegenüber dem Pressteil nach innen federnd vorgespannt sind und dadurch auch lagedefiniert sind. Die Pressteile können sich dann gegen die Federkraft zur Verpressung weiterbewegen.

Bei korrekter Positionierung ist vorzugsweise eine Trennung zwischen Führung und Verpressung auch insoweit vorgesehen, als die Pressteile mit ihren keilförmigen Spitzen ausschließlich die Presslasche selbst erfassen und das oder die Führungsteile des Fittings nicht von den Spitzen erfasst werden. Umgekehrt sind vorzugsweise die Führungsteile des Presswerkzeugs so ausgelegt, dass sie nicht mit der Presslasche selbst in Wechselwirkung treten, sondern nur mit davon unabhängigen Führungsteilen des Fittings.

Gemäß einer weiteren bevorzugten Ausgestaltung ist ein Fittingsteil vorgesehen, der beim Verpressen von dem Fitting abgenommen wird. Es handelt sich um einen Indikator, also ein Teil, dessen Vorhandensein oder Fehlen am Fitting klar angibt, ob die Verpressung bereits stattgefunden hat oder nicht. Ein solches Indikatorteil kann von dem Fitting zum Beispiel abgeclipst werden.

Die Abdeckplatten können für sich oder gemeinsam mit benachbarten Bereichen der Führungsteile (wie beim Ausführungsbeispiel) Auswurföffnungen für den Indikator bilden. Zu diesen Auswurföffnungen wird auf die bereits zitierte EP 3 090 835 A1 verwiesen. Die Abdeckplatten und gegebenenfalls auch die Führungsteile bilden nämlich die in diesem Dokument beschriebenen Außenwände des Presswerkzeugs bezüglich der Leitungsrichtung.

In dieser Form können die eigentlich vorbekannten Zusammenhänge mit der Markierung unverpresster Pressfittinge durch den Indikator, dem Abclipsen des Indikators beim Verpressen und dem Auswerfen in vorteilhafter Weise erhalten bleiben, obwohl die erfindungsgemäßen Abdeckplatten vorhanden sind, und zwar einfach in dem diese formangepasst werden, etwa durch eine seitliche Einbuchtung wie beim Ausführungsbeispiel, die sich mit den Führungsteilen dann zu den Auswurföffnungen ergänzt.

Die Erfindung betrifft besonders solche Presswerkzeuge, die im betriebsbereiten Zustand zur Verpressung mobil sind, also von Personen zu dem bereits grundsätzlich montierten Pressfitting hin bewegt werden können. Dies betrifft einerseits manuell zu betätigende Presswerkzeuge, wobei in vielen Fällen das eigentliche Werkzeug (auch im Sinn dieses Begriffes in der vorliegenden Anmeldung) an einer die Betätigung erst ermöglichenden weitergehenden Vorrichtung (im Grunde einer Zange) montiert werden muss; in diesem Fall ist also die Gesamtvorrichtung einschließlich Zange und Werkzeug mit "mobil" gemeint. Der Aspekt betrifft andererseits auch motorische Antriebe für solche Werkzeuge, etwa druckfluidische Antriebe, und in diesem Fall ebenfalls die Gesamtvorrichtung mit Werkzeug und Antrieb. Besonders bevorzugter Weise bedeutet "mobil" in diesem Fall, dass die Vorrichtung einschließlich Werkzeug und Zange bzw. Antrieb beim Verpressen in der Hand gehalten wird.

In solchen Fällen sind die Werkzeuge besonders schlaggefährdet, weil sie eher anstoßen oder herunterfallen können als bei weniger mobilen oder nichtmobilen Vergleichsfällen.

Schließlich betrifft die Erfindung auch eine Verwendung eines erfindungsgemäßen Presswerkzeugs, bei welcher ein Pressfitting des beschriebenen Typs tatsächlich verpresst wird. Vorzugsweise wird dabei die bereits vorrichtungsmäßig beschriebene Aufgabenteilung zwischen den Führungsteilen und den Pressteilen realisiert, insbesondere dadurch, dass die Führungsteile zwar in einem ersten Abschnitt der Schließbewegung ihre Führungsaufgabe wahrnehmen, aber in einer Schlussphase der Schließbewegung nicht mehr weiter bewegt werden, sondern nur noch die Pressteile die Verpressung durchführen.

Ebenfalls bevorzugterweise erfolgt die Verwendung mit einer im obigen Sinn mobilen Vorrichtung, und zwar bevorzugterweise so, dass diese dabei in der Hand gehalten wird.

Im Folgenden wird die Erfindung anhand eines Ausführungsbeispiels näher erläutert. Dazu zeigen die Figuren das Ausführungsbeispiel wie folgt:
- Figur 1: zeigt in perspektivischer Darstellung ein Presswerkzeug nach dem Stand der Technik;
- Figur 2: zeigt in analoger perspektivischer Darstellung ein erfindungsgemäßes Presswerkzeug;
- Figuren 3, 4 und 5: zeigen eine jeweilige mittige Schnittansicht durch das Presswerkzeug aus Figur 2 mit unterschiedlichen Stellungen, wobei die Stellung in Figur 3 der Ansicht in Figur 2 entspricht;
- Figuren 6 bis 9: entsprechen den Figuren 2 bis 5, jedoch zu einem für größere Fittinge und größere Leitungsdimensionen ausgelegten Presswerkzeug.

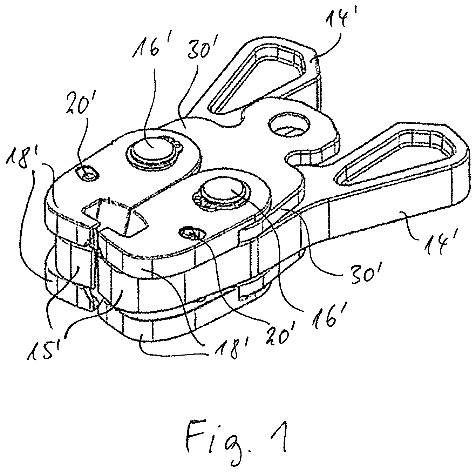

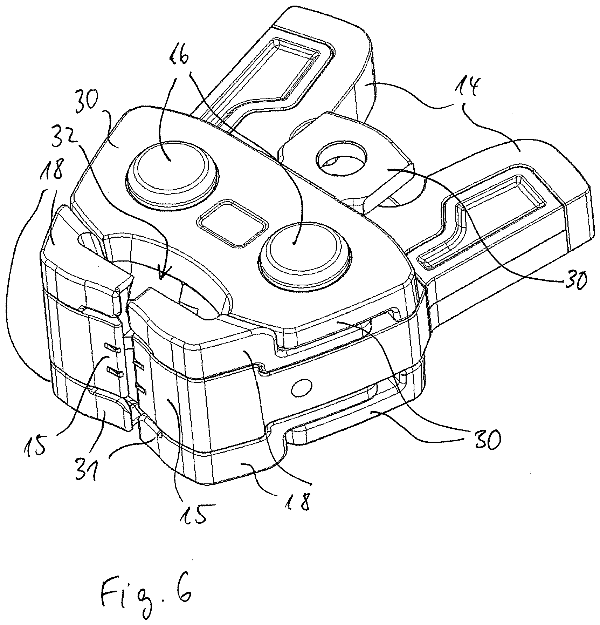

Figur 1 zeigt den Stand der Technik, nämlich ein Presswerkzeug gemäß der bereits zitierten EP 3 090 835 A1, vergleiche dort Figur 6. Dieses konventionelle Presswerkzeug zeigt zwei um jeweilige Drehachsbolzen 16' schwenkbare Pressteile 15', wobei in Figur 1 unter und über den Pressteilen 15' Führungsteile 18' angeordnet sind, deren Form, Funktion und Bewegungen in der zitierten Anmeldung und auch in der EP 3 090 834 A1 näher beschrieben sind.

Zwischen den Pressteilen 15' und den Führungsteilen 18' befinden sich jeweils Platten 30', die an den Bewegungen der Pressteile 15' und der Lagerteile 18' nicht teilnehmen und dabei die Drehachsbolzen 16' halten, wobei die Lagerachsbolzen 16' jeweils außerhalb der Führungsteile 18' mit gängigen Sprengringen gesichert sind. Über diese Platten 30' können die manuellen oder motorischen Antriebe an dem Werkzeug angeschlossen werden, die die in Figur 1 nach rechts hinten abstehenden Schenkel 14' in Verlängerung der Pressteile 15' und (in der im Stand der Technik schon beschriebenen Weise) über die Pressteile 15' mittels der Stifte 20' auch die Führungsteile 18' bewegen.

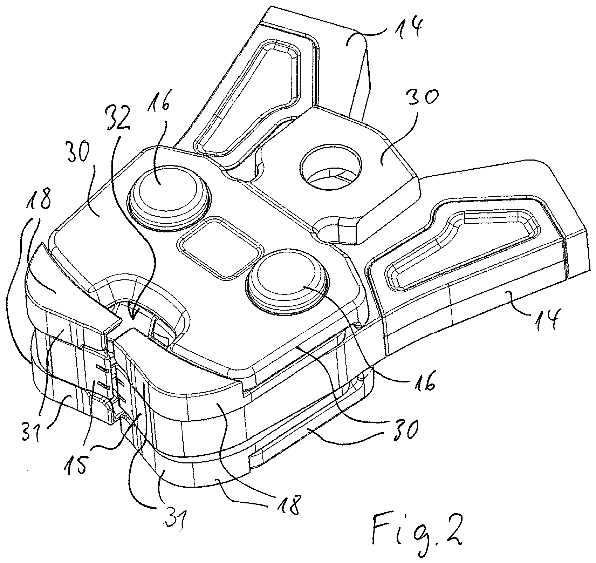

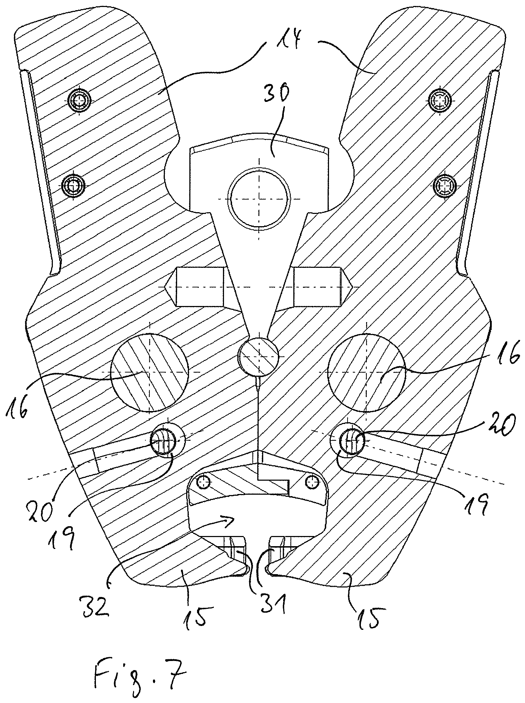

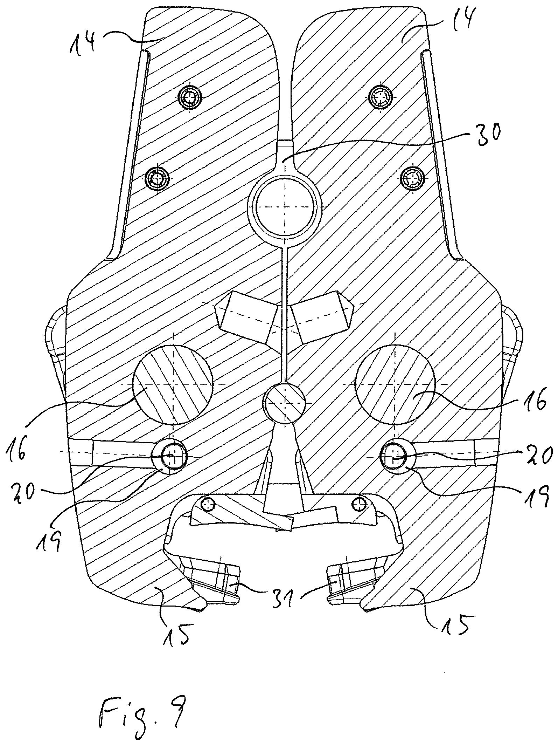

Figur 2 zeigt eine analoge Ansicht eines erfindungsgemäßen Ausführungsbeispiels, wobei hier und im Folgenden zu den zitierten Dokumenten analoge Bezugszeichen verwendet werden und zur Unterscheidung die Bezugszeichen in Figur 1 jeweils ein Apostrophzeichen nach der Zahl enthalten und in den Figuren 2 bis 9 nicht.

Figur 2 zeigt anschaulich, dass der dem Pressfitting zugewandte vordere Bereich des Presswerkzeugs, also der in Figur 2 nach links vorn/unten zeigende Bereich, im Wesentlichen dem vorgeschriebenen Presswerkzeug entspricht. Dabei sind allerdings an jedem Pressteil 15, und zwar nach dessen vorn links weisender Seite, zwei jeweilige Markiervorsprünge vorgesehen, die Gegenstand einer parallelen Anmeldung und für die vorliegende Erfindung ohne Belang sind. Gleichzeitig sind die Platten 30' aus dem zitierten Stand der Technik ersetzt durch außerhalb der Führungsteile 18 liegende Abdeckplatten 30. Diese Abdeckplatten erfassen in einer Projektion entlang der Leitungsrichtung, also parallel zur Drehachsenrichtung, den allergrößten Teil der Führungsteile 18, nämlich deren gesamte Erstreckung in der Breitenrichtung (in Figur 2 von links oben nach rechts unten) und jedenfalls den größten Teil in der Längsrichtung (in Figur 2 von links unten nach rechts oben). Dadurch können die Abdeckplatten 30 Schläge und Stöße in diesem Überlappungsbereich abfangen, wobei sie ersichtlich relativ kräftig aus technischem Kunststoff oder Metall, insbesondere Feinguss, ausgeführt und damit vergleichsweise unempfindlich sind.

Eine solche Schutzfunktion entfalten sie allerdings nicht direkt für den vordersten Bereich des Presswerkzeugs, denn dort gibt es vordere Backen 31 der Führungsteile 18, die nach vorne vor die Abdeckplatten 30 vorstehen und in ähnlicher Form auch schon in Figur 1 zu sehen sind. Im Unterschied zu Figur 1 allerdings sind die Führungsteile 18 im Überlappungsbereich mit den Abdeckplatten 30 um mehr als die Hälfte schmaler ausgeführt (bezüglich der Leitungsrichtung), sodass trotz der nicht unerheblichen Stärke der Abdeckplatten 30 diese in der Leitungsrichtung nicht oder nur marginal über die vorderen Backen 31 der Führungsteile 18 überstehen. Damit bleibt das Presswerkzeug trotz des seitlichen Schutzes durch die Abdeckplatten 30 insgesamt in der Leitungsrichtung relativ schlank, was beim Einsatz an schlecht zugänglichen Montagestellen eines Pressfittings von großem Vorteil sein kann.

Andererseits erlauben die Backen 31 die in der EP 3 090 835 A1 beschriebene Formgestaltung der für die Führungsfunktion relevanten Teile der Führungsteile 18. Man kann auch in Figur 2 die entsprechende (in der Breitenrichtung betrachtet) rechteckig L-förmige Ausgestaltung der unmittelbar dem Pressfitting zugewandten inneren Enden der Backen 31 erkennen.

Allerdings stabilisieren die Abdeckplatten 30 durchaus auch die vorderen Backen 31, und zwar weil die Abdeckplatten 30 die Führungsteile 18 im Überlappbereich einfassen und damit bei Stoßbelastungen halten und insoweit auch die vorderen Backen 31 über relativ kurze Hebelarme abgestützt sind. Das wird durch einen Vergleich mit Figur 1 unmittelbar deutlich, wo die wirksamen Hebelarme bis zu den Achsbolzen 16' reichen.

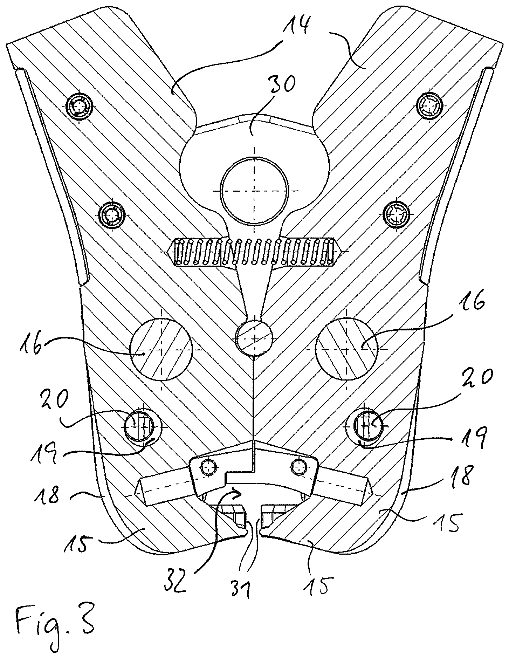

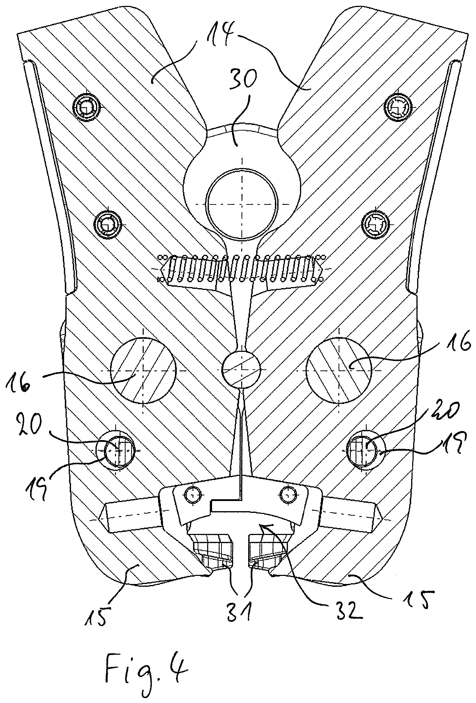

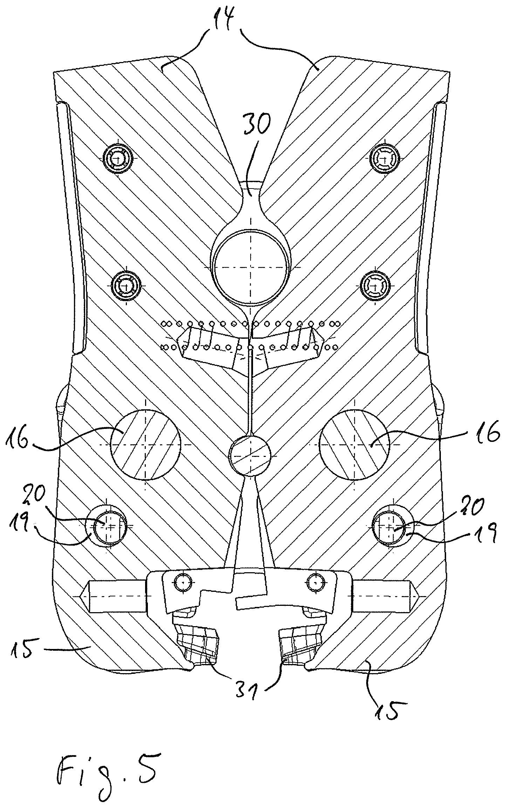

Die Figuren 3, 4 und 5 zeigen einen mittigen Schnitt entlang der Längsrichtung durch die Pressteile 15 und die zugehörigen Schenkel 14, wobei sich die Figuren durch die verschiedenen Relativpositionen der Pressteile zueinander unterscheiden. Figur 3 zeigt genau wie die Figuren 1 und 2 die Position, in der die vorderen Keilspitzen der Pressteile 15 maximal aneinander angenähert sind, also die Verpressstellung. In Figur 4 sind dem gegenüber diese Keilspitzen und damit die Pressteile 15 etwas zurückgezogen, wobei sich im Vergleich zu Figur 3 die Führungsteile 18 noch nicht voneinander weg bewegt haben. Figur 5 zeigt die Öffnungsstellung, in der sowohl die Pressteile 15 als auch die Führungsteile 18 auseinander bewegt sind.

Beim Greifen einer Presslasche würde man also zunächst in der Position gemäß Figur 5 diese Presslasche umfassen, dann eine Schließbewegung in die Position gemäß Figur 4 durchführen, sodass die Führungsteile eine korrekte Positionierung zwischen dem Pressfitting und seiner Presslasche einerseits und andererseits dem Presswerkzeug herbeiführen, woraufhin dann mit einer Bewegung in die Position 3 die eigentliche Verpressung stattfindet. Das ist ausführlich in den zitierten früheren Anmeldungen beschrieben.

Zur Illustration zeigen die Figuren 6 bis 9 in grundsätzlich analoger Abfolge zu den Figuren 2 bis 6 ein größeres Presswerkzeug für einen größeren Pressfitting, also größere Leitungsdurchmesser.

In den Schnittdarstellungen der Figuren 3, 4, 5, 7, 8, 9 erkennt man im Übrigen einen ähnlichen Aufbau wie bei den zitierten Voranmeldungen. Mit 17 sind Bohrungen für eine Feder bezeichnet, wobei diese Kompressionsschraubenfeder in Schließrichtung die Arme der Pressteile beaufschlagt. Im Übrigen sind die dargestellten Presswerkzeuge aber durch eine nicht dargestellte und an sich vorbekannte Antriebseinrichtung motorisch zu betätigen. Sie könnten alternativ auch mit einer ebenfalls an sich vorbekannten Handantriebseinrichtung als Presszange benutzt werden.

Die in den zitierten Anmeldungen beschriebenen Mitnahmemechanismen zwischen den Führungs- und den Pressteilen, nämlich Federn 21 mit Zylindergehäuse und Kolbenstange, finden sich hier in den Pressteilen (statt in den Führungsteilen wie in den Voranmeldungen). Die zugehörigen Stifte 20 sind den Längsschlitzen bzw. etwas aufgeweiteten Löchern 19 geführt, die ihrerseits in den Führungsteilen liegen und daher nicht zu sehen, weil von den Abdeckplatten 30 verdeckt sind. Bei dem kleineren Presswerkzeug aus den Figuren 2-5 erkennt man nur die Mitnahmestifte 20 in den Löchern 19. Die nicht eingezeichneten zugehörigen Federn sind in den Sacklöchern rechts und links von der Auswurföffnung 32 gehalten und mit dem Stift 20 auf der jeweils entgegengesetzten Seite verbunden.

Im Übrigen finden sich in den zitierten Voranmeldungen ausführliche Erläuterungen zur Funktionsweise der Presswerkzeuge mit einem passenden Pressfitting, konkret einem Oetiker-Fitting, wobei auch die Wechselwirkung des Presswerkzeugs mit einem an dem Pressfitting angebrachten Indikator dargestellt ist, der beim Verpressen durch das Presswerkzeug von dem Pressfitting abgeclipst und durch auch bei der vorliegenden Erfindung deutlich sichtbare Auswurföffnungen, hier mit dem Bezugszeichen 32, seitlich ausgeworfen werden kann. Die Auswurföffnungen 32 sind durch von der Vorderseite her vorgenommene Einbuchtungen in den Abdeckplatten 30 gebildet und werden nach vornhin je nach Stellung mehr oder weniger vollständig durch die Backen 31 der Führungsteile geschlossen. Man erkennt deutlich, dass diese Einbuchtungen für die Auswurföffnungen 32 die Stabilität der Abdeckplatten 30 nicht tangieren, insbesondere auch deswegen nicht, weil in diesem Bereich keine flachen Bereiche der Führungsteile 18 abzudecken sind.

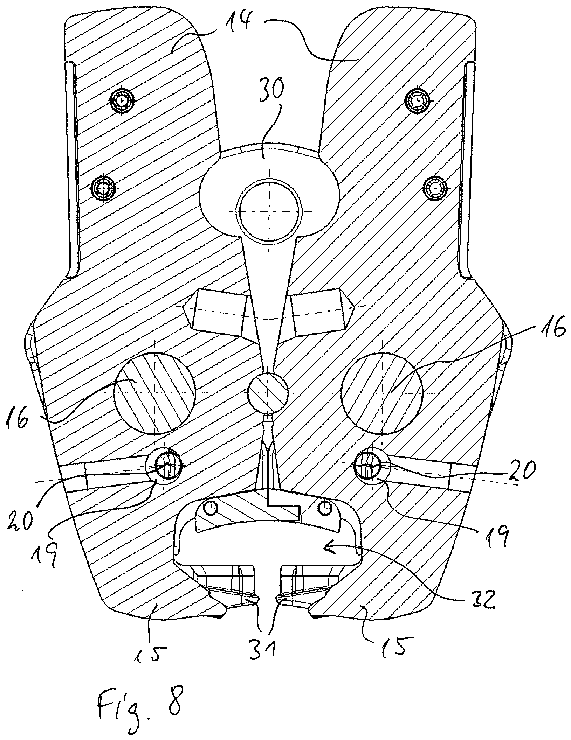

Die spezifische gewinkelte Form der Führungsteile an ihren den Pressfittingen zugewandten vorderen Enden ergibt sich ebenfalls aus den Erläuterungen in den Voranmeldungen und dient der Führung des Presswerkzeugs bzw. der korrekten Positionierung beim Übergang von den Werkzeugstellungen gemäß den Figuren 5 und 10 in diejenigen gemäß den Figuren 4 und 8.

## Patentansprüche

1. Presswerkzeug für einen Fitting mit einem zylindrischen Teil und einer davon abstehenden Presslasche, die senkrecht zu einer axialen Richtung des Fittings zu verpressen ist, welches Presswerkzeug aufweist:
zwei mit einer Bewegung aufeinander zu schließbare und mit einer Bewegung voneinander weg öffenbare Werkzeughälften (14, 15, 18) mit jeweils einem der Verpressung der Presslasche bei der Schließbewegung dienenden Pressteil (15),
und dem Führen des Presswerkzeugs auf dem Pressfitting bei der Schließbewegung dienenden Führungsteilen (18), wobei die beiden Werkzeughälften (14,15,18) jeweils doppelt ausgeführte Führungsteile (18) aufweisen, die bezüglich der axialen Richtung beidseits des jeweiligen Pressteils (15) vorgesehen sind,
**gekennzeichnet durch**
zwei die jeweiligen Führungsteile (18) in einer Projektion in einer zu der Richtung der Schließbewegung senkrechten und zu dem zylindrischen Teil achsparallelen Leitungsrichtung überlappende Platten (30), und zwar je eine Platte (30) auf jeder Seite der Pressteile (15) bzgl. der Leitungsrichtung,
und **dadurch**, dass die Platten in der Leitungsrichtung jeweils außerhalb der Führungsteile (18) liegen und diese als Abdeckplatten (30) nach außen zumindest teilweise schützend abdecken.

2. Presswerkzeug nach Anspruch 1, bei dem die Pressteile (15) und die Führungsteile (18) der Werkzeughälften (14, 15, 18) gelenkig bewegbar sind, und zwar vorzugsweise um jeweils eine eigene Gelenkachse (16) pro Werkzeughälfte (14, 15, 18), die vorzugsweise für die jeweiligen Führungsteile (18) und das jeweilige Pressteil (15) gemeinsam existiert.

3. Presswerkzeug nach Anspruch 2, bei dem zumindest ein die zumindest eine Gelenkachse (16) bildender Achsbolzen von den beiden Abdeckplatten (30) als Lagerplatten gehalten ist.

4. Presswerkzeug nach Anspruch 2 oder 3, bei dem die beiden Abdeckplatten (30) von einem die Gelenkachse (16) bzw. von zwei jeweils die eigene Gelenkachse (16) bildenden Achsbolzen durchsetzt sind.

5. Presswerkzeug nach Anspruch 3, optional auch Anspruch 4, bei dem keine weiteren Lagerplatten für den zumindest einen Achsbolzen vorgesehen sind und vorzugsweise in der Leitungsrichtung zusätzlich zu den Abdeckplatten (30), den Führungsteilen (18), den Pressteilen (15) und eventuellen Überständen des zumindest einen Achsbolzens keine weitere Bauteilschicht mehr vorgesehen ist.

6. Presswerkzeug nach einem der vorstehenden Ansprüche, bei dem die beiden Abdeckplatten (30) die jeweiligen Führungsteile bezüglich einer zu der Richtung der Schließbewegung parallelen Breitenrichtung vollständig seitlich abdecken.

7. Presswerkzeug nach einem der vorstehenden Ansprüche, bei dem die beiden Abdeckplatten (30) die jeweiligen Führungsteile (18) bezüglich einer zu der Richtung der Schließbewegung und zu der Leitungsrichtung senkrechten Längsrichtung bis mindestens zu einem Abstand von der bezüglich dieser Längsrichtung vordersten Seite des Presswerkzeugs abdecken, welcher Abstand höchstens 25 % der maximalen Ausdehnung der Abdeckplatten (30) in der Breitenrichtung und/oder höchstens 35 % des Abstandes in der Längsrichtung zwischen einer Gelenkachse (16) für die Schließbewegung und der bezüglich dieser Längsrichtung vordersten Seite des Presswerkzeugs beträgt.

8. Presswerkzeug nach einem der vorstehenden Ansprüche, bei dem die Führungsteile (18) zu einem Teil in der Längsrichtung über die Abdeckplatten (30) überstehen, wobei vorzugsweise die überstehenden Teile der Führungsteile in der Leitungsrichtung gegenüber dem zwischen den Abdeckplatten (30) und den Pressteilen (15) liegenden Anteil verdickt sind.

9. Presswerkzeug nach einem der vorstehenden Ansprüche, bei dem die Führungsteile (18) dazu ausgelegt sind, an der eigentlichen Verpressung der Presslasche nicht teilzuhaben und ausschließlich der Führung des Presswerkzeugs dabei zu dienen.

10. Presswerkzeug nach Anspruch 9, bei dem zumindest in einer der Verpressung dienenden Schlussphase der Schließbewegung jedes Pressteil (15) über die jeweiligen Führungsteile (18) hinaus aufeinander zu bewegbar ist.

11. Presswerkzeug nach Anspruch 10, bei dem die Pressteile (15) und die Führungsteile (18) jeder Werkzeughälfte (14, 15, 18) durch einen Eingriff eines Vorsprungs (20) in einen Längsschlitz (19) aneinander gekoppelt sind, wobei der Längsschlitz (19) einerseits in der Schlussphase der Schließbewegung die Bewegung des Pressteils (15) über das Führungsteil (18) hinaus erlaubt und andererseits bei einer Öffnungsbewegung zur Mitnahme dient.

12. Presswerkzeug nach Anspruch 11, bei dem das den Vorsprung (20) tragende Teil (15), vorzugsweise der Vorsprung (20) selbst, federnd an das den Längsschlitz (19) tragende Teil (18) gekoppelt ist.

13. Presswerkzeug nach einem der vorstehenden Ansprüche, bei dem die beiden Werkzeughälften (14, 15, 18) in jeweiligen bzgl. der Leitungsrichtung seitlichen Außenwänden der Werkzeughälften (14, 15, 18) in einem bzgl. dieser Außenwand geschlossenen Zustand der Werkzeughälften (14, 15, 18) eine Auswurföffnung (32) zum Auswerfen eines bei dem Verpressen von dem Pressfitting abgenommenen Indikators aufweisen, wobei die Auswurföffnungen (32) zumindest teilweise von den Abdeckplatten (30) und vorzugsweise außerdem von den Führungsteilen (18) begrenzt sind.

14. Presswerkzeug nach einem der vorstehenden Ansprüche, welches zum Verpressen per manueller oder motorischer Betätigung vollständig ausgestattet und in diesem Zustand mobil ist, vorzugsweise zum Verpressen in der Hand zu halten ist.

15. Verwendung eines Presswerkzeugs nach einem der vorstehenden Ansprüche zum Verpressen eines Fittings mit einem zylindrischen Teil und davon abstehender Presslasche, bei welcher vorzugsweise das Presswerkzeug zusammen mit einer Vorrichtung zur manuellen oder motorischen Betätigung beim Verpressen mobil ist, vorzugsweise in der Hand gehalten wird.

## Claims

1. A press tool for a fitting with a cylindrical part and a press lug protruding therefrom, which is to be pressed perpendicularly to an axial direction of the fitting, which press tool comprises:
two tool halves (14, 15, 18) which can be closed by a movement towards each other, and opened by a movement away from each other,
each with a press part (15) serving to press the press lug during the closing movement,
and guide parts (18) serving to guide the press tool on the press fitting during the closing movement, wherein the two tool halves (14, 15, 18) each comprise double guide parts (18), which are provided on both sides of each press part (15) with respect to the axial direction,
**characterised by**
two plates (30) overlapping the respective guide parts (18) in a projection in a line direction perpendicular to the direction of the closing movement and axially parallel to the cylindrical part, namely a respective plate (30) on each side of the press parts (15) with respect to the line direction,
and in that the plates respectively lie outside the guide parts (18) in the line direction and at least partially protectively cover these as cover plates (30) towards the outside.

2. The press tool according to claim 1, in which the press parts (15) and the guide parts (18) of the tool halves (14, 15, 18) can be moved in a hinged manner, preferably about a separate hinge axis (16) for each tool half (14, 15, 18), which axis preferably exists jointly for each of the guide parts (18) and the respective press part (15).

3. The press tool according to claim 2, in which at least one axle bolt forming the at least one hinged axis (16) is held by the two cover plates (30) as bearing plates.

4. The press tool according to claim 2 or 3, in which the two cover plates (30) are penetrated by one axle bolt forming the hinge axis (16) or from two axle bolts forming their own hinge axis (16).

5. The press tool according to claim 3, optionally also claim 4, in which no further bearing plates are provided for the at least one axle bolt and preferably no further component layer is provided in the line direction in addition to the cover plates (30), the guide parts (18), the press parts (15) and any extensions of the at least one axle bolt.

6. The press tool according to one of the preceding claims, in which the two cover plates (30) completely laterally cover the respective guide parts with respect to a width direction parallel to the direction of the closing movement.

7. The press tool according to one of the preceding claims, in which the two cover plates (30) cover the respective guide parts (18) with respect to a longitudinal direction perpendicular to the direction of the closing movement and to the line direction at least up to a distance from the foremost side of the press tool with respect to this longitudinal direction, which distance is at most 25 % of the maximum extent of the cover plates (30) in the width direction and/or at most 35 % of the distance in the longitudinal direction between a hinge axis (16) for the closing movement and the foremost side of the press tool with regard to this longitudinal direction.

8. The press tool according to one of the preceding claims, in which the guide parts (18) project partially in the longitudinal direction over the cover plates (30), wherein preferably the parts of the guide parts projecting over in the longitudinal direction are thickened compared to the part lying between the cover plates (30) and the press parts (15).

9. The press tool according to one of the preceding claims, in which the guide parts (18) are designed in such a way, that they do not participate in the actual pressing of the press lug and serve exclusively the guiding of the press tool therein.

10. The press tool according to claim 9, in which each press part (15) is movable towards each other beyond the respective guide parts (18), at least in a final phase of the closing movement serving the pressing.

11. The press tool according to claim 10, in which the press parts (15) and the guide parts (18) of each tool half (14, 15, 18) are coupled to one another by engagement of a protrusion (20) into a longitudinal slot (19), wherein the longitudinal slot (19) allows on one hand the movement of the press part (15) beyond the guide part (18) in the final phase of the closing movement and, on the other hand, serves the entrainment during a opening movement.

12. The press tool according to claim 11, in which the part (15) having the protrusion (20), preferably the protrusion (20) itself, is coupled in a springloaded manner to the part (18) bearing the longitudinal slot (19).

13. The press tool according to one of the preceding claims, in which the two tool halves (14, 15, 18) comprise an ejection opening (32) for ejecting an indicator removed from the press fitting during pressing, which ejection opening is located in respective outer walls of the tool halves (14, 15, 18) which are lateral with respect to the line direction in a closed state of the tool halves (14, 15, 18) with regard to this outside wall, wherein the ejection openings (32) are delimited at least partially by the cover plates (30), and preferably also by the guide parts (18).

14. The press tool according to one of the preceding claims, which is completely equipped for pressing by manual or motorised actuation and is mobile in this state, preferably to be held in the hand for pressing.

15. A use of a press tool according to one of the preceding claims for pressing a fitting with a cylindrical part and a press lug protruding therefrom, in which use preferably, the press tool together with a device for the manual or motorised actuation during the pressing is mobile, preferably to be held in the hand.

## Revendications

1. Outil de sertissage destiné à un raccord présentant une partie cylindrique et une collerette de sertissage qui s'en élève et qui est destinée à être sertie perpendiculairement à un sens axial du raccord, lequel outil de sertissage présente:
deux moitiés d'outil (14, 15, 18) qui sont susceptibles de se fermer selon un mouvement de rapprochement l'une de l'autre et de s'ouvrir selon un mouvement d'écartement l'une de l'autre et qui présentent chacune une partie de sertissage (15) servant au sertissage de la collerette de sertissage sous l'effet du mouvement de fermeture,
et des parties de guidage (18) servant à guider l'outil de sertissage sur le raccord à sertir lors du mouvement de fermeture, chacune desdites deux moitiés d'outil (14, 15, 18) présentant lesdites parties de guidage (18) en double, celles-ci étant prévues de part et d'autre de leur partie de sertissage (15) respective par rapport au sens axial,
**caractérisé**
**par** deux plaques (30) en superposition des parties de guidage (18) respectives selon une projection allant dans le sens d'une conduite perpendiculaire au mouvement de fermeture et parallèle à l'axe de la partie cylindrique, à savoir une plaque (30) de chaque côté des parties de sertissage (15) eu égard au sens de la conduite,
et en ce que les plaques se trouvent chacune, dans le sens de la conduite, sur l'extérieur des parties de guidage (18) et offrent à ces dernières une protection extérieure au moins partielle en servant de plaques de recouvrement (30).

2. Outil de sertissage selon la revendication 1, dans lequel les parties de sertissage (15) et les parties de guidage (18) des moitiés d'outil (14, 15, 18) sont mobiles de façon articulée, de préférence sur un axe d'articulation (16) propre à chaque moitié d'outil (14, 15, 18), lequel axe d'articulation existe de préférence en commun pour les parties de guidage (18) respectives et sa partie de sertissage (15) respective.

3. Outil de sertissage selon la revendication 2, dans lequel au moins un axe pivot formant l'au moins un axe d'articulation (16) est retenu par les deux plaques de recouvrement (30) agissant à la manière de plaques de support.

4. Outil de sertissage selon la revendication 2 ou 3, dans lequel les deux plaques de recouvrement (30) sont traversées par un axe pivot formant l'axe d'articulation (16) ou par deux axes pivots formant chacun ledit axe d'articulation (16) propre.

5. Outil de sertissage selon la revendication 3, éventuellement selon la revendication 4, dans lequel il n'est prévu aucune autre plaque de support pour l'au moins un axe pivot et dans lequel il n'est de préférence prévu aucune autre couche de composants, dans le sens de la conduite, outre les plaques de recouvrement (30), les parties de guidage (18), les parties de sertissage (15) et les éventuelles parties surplombantes de l'au moins un axe pivot.

6. Outil de sertissage selon l'une des revendications précédentes, dans lequel les deux plaques de recouvrement (30) recouvrent totalement les côtés des parties de guidage respectives eu égard au sens de la largeur qui est parallèle au sens de la fermeture.

7. Outil de sertissage selon l'une des revendications précédentes, dans lequel les deux plaques de recouvrement (30) recouvrent les parties de guidage (18) respectives eu égard au sens longitudinal perpendiculaire au sens de la fermeture et au sens de la conduite jusqu'à au moins un certain écart du côté le plus avant de l'outil de sertissage eu égard audit sens longitudinal, ledit écart faisant au plus 25 % de l'étendue maximale des plaques de recouvrement (30) dans le sens de la largeur et/ou au plus 35 % de l'écart existant dans le sens longitudinal entre un axe d'articulation (16) servant au mouvement de fermeture et le côté le plus avant de l'outil de sertissage eu égard audit sens longitudinal.

8. Outil de sertissage selon l'une des revendications précédentes, dans lequel les parties de guidage (18) dépassent en partie des plaques de recouvrement (30) dans le sens longitudinal, lesdites parties en dépassement desdites parties de guidage étant de préférence plus épaisses dans le sens de la conduite en comparaison des portions situées entre les plaques de recouvrement (30) et les parties de sertissage (15).

9. Outil de sertissage selon l'une des revendications précédentes, dans lequel les parties de guidage (18) sont conçues pour n'avoir aucun effet sur la collerette de sertissage et pour servir exclusivement de guide à l'outil de sertissage pendant la réalisation effective du sertissage.

10. Outil de sertissage selon la revendication 9, dans lequel chacune des parties de sertissage (15) peut se rapprocher de l'autre au-delà des parties de guidage (18) respectives, au moins lors d'une phase terminale du mouvement de fermeture visant à effectuer le sertissage.

11. Outil de sertissage selon la revendication 10, dans lequel les parties de sertissage (15) et les parties de guidage (18) de chaque moitié d'outil (14, 15, 18) sont couplées entre elles grâce à l'introduction d'une pièce en saillie (20) dans une rainure longitudinale (19), ladite rainure longitudinale (19) permettant d'une part, lors de la phase finale du mouvement de fermeture, le déplacement de la partie de sertissage (15) au-delà de la partie de guidage (18) et servant d'autre part à l'entraînement lors du mouvement d'ouverture.

12. Outil de sertissage selon la revendication 11, dans lequel la partie (15) portant la pièce en saillie (20), voire de préférence la pièce en saillie (20) elle-même, est couplée élastiquement à la partie (18) portant la rainure longitudinale (19).

13. Outil de sertissage selon l'une des revendications précédentes, dans lequel les deux moitiés d'outil (14, 15, 18) présentent, dans des parois extérieures latérales respectives ― eu égard au sens de la conduite - desdites moitiés d'outil (14, 15, 18), dans un état fermé desdites moitiés d'outil (14, 15, 18) eu égard à cette paroi extérieure, une ouverture d'éjection (32) servant à l'éjection d'un indicateur retiré du raccord à sertir au cours du sertissage, lesdites ouvertures d'éjection (32) étant délimitées au moins partiellement par les plaques de recouvrement (30) et de préférence en outre par les parties de guidage (18).

14. Outil de sertissage selon l'une des revendications précédentes, lequel est totalement équipé pour réaliser un sertissage par actionnement manuel ou assisté par un moteur, et ce en étant portatif, en étant de préférence tenu à la main pour réaliser le sertissage.

15. Utilisation d'un outil de sertissage selon l'une des revendications précédentes en vue de réaliser le sertissage d'un raccord présentant une partie cylindrique et une collerette de sertissage qui s'en élève, dans le cadre de laquelle utilisation l'outil de sertissage, conjointement au dispositif d'actionnement manuel ou assisté par un moteur lors du sertissage, est de préférence un outil portatif, et est de préférence tenu à la main.
